# EUROPÄISCHE PATENTSCHRIFT

(11) **EP 0 613 302 B1**
(45) Veröffentlichungstag und Bekanntmachung des Hinweises auf die Patenterteilung: **10.05.2000**
(21) Anmeldenummer: 94200411.0
(22) Anmeldetag: 18.02.1994
(51) Int. Cl.: H04N 7/24

(54) **Videodecoder mit einer Steuereinheit**
Videodecoder with a control unit
Décodeur vidéo avec unité de commande

(30) Priorität: 26.02.1993 DE 4305911
(43) Veröffentlichungstag der Anmeldung: 31.08.1994
(73) Patentinhaber: Philips Corporate Intellectual Property GmbH, 52064 Aachen (DE); Koninklijke Philips Electronics N.V., 5621 BA Eindhoven (NL)
(72) Erfinder: Riegel, Maximilian, c/o Philips Patentverwaltung, D-2000 Hamburg 1 (DE); Stenzel, Ulrich, c/o Philips Patentverwaltung GmbH, D-2000 Hamburg 1 (DE)
(74) Vertreter: Volmer, Georg, Dipl.-Ing.

(56) Entgegenhaltungen:
- EP-A- 0 448 388
- EP-A- 0 502 622
- US-A- 4 833 543
- US-A- 5 107 348
- PLOMPEN 'Motion Video Coding for Visual Telephony' 1989 , PTT RESEARCH NEHER LABORATORIES , LEIDSCHENDAM (NL) * Seite 195, Absatz 6.4.2; Abbildung 6.15 *

## Beschreibung

Die Erfindung betrifft einen Videodecoder gemäß dem Oberbegriff des Patentanspruchs 1.

Grundlegende funktionelle und konstruktive Merkmale eines hier gemeinten Videodecoders sind z. B. der H.261-Empfehlung (vgl. z. B. Draft Revision of Recommendation H.261: Videocodec for Audiovisual Services at p x kbit/s. Signal Processing: Image Communication 2(1990), Seiten 221 bis 239. Elsevier Science Publishers B.V.) zu entnehmen. Diese Empfehlung wird im folgenden mit (1) zitiert werden.

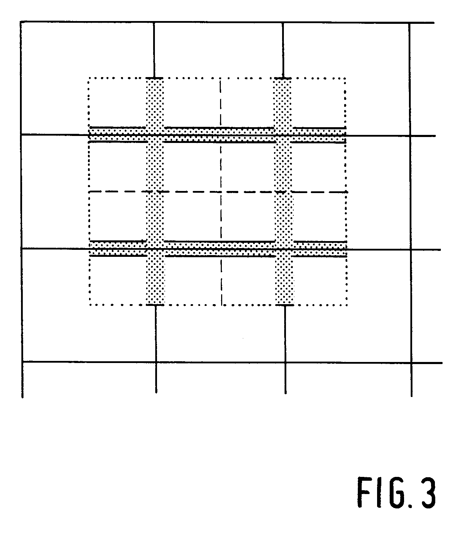

Figur 3 in (1) zeigt das Prinzipschaltbild eines zugehörigen Coders, dessen Wirkungsweise und Aufbau die Funktion und die Konstruktion eines Decoders nahelegen, wie nun in groben Zügen erläutert werden soll.

Der Coder nach (1) ist ein prädiktiver Coder, bei dem die Daten eines decodierten Videobildes als Prädiktionswerte für die Daten des nächstfolgenden Videobildes verwendet werden. Codiert und übertragen wird im Regelfall die Differenz (Prädiktionsfehler) zwischen den Werten eines Eingangsbildes und den Prädiktionswerten. In Ausnahmefällen wird von der Differenzbildung abgesehen und das unveränderte Eingangsbild codiert sowie übertragen. Wird der Prädiktionsfehler codiert, arbeitet der Coder im sogenannten INTER-Modus, anderenfalls im INTRA-Modus. Bei Bewegtbildern kann auch eine Bewegungsschätzung vorgenommen werden, um bessere Prädiktionswerte für diese Art von Bildern zu erhalten.

Wegen der Prädiktionscodierung enthält der Coder eine Rückkopplungsschleife mit einem Bildspeicher, in dem die Prädiktionswerte - also das dem Eingangsbild vorangegangene, codierte und wieder decodierte Videobild - zwischengespeichert werden. Folglich befinden sich in der Rückkopplungsschleife weitere Funktionseinheiten, die die im Codierzweig vorgenommenen Operationen rückgängig machen soweit dies möglich ist. Weiterhin enthält die Rückkopplungsschleife ein Tiefpaßfilter, das sogenannte Schleifenfilter.

Der Codierzweig selbst enthält eine Transformationseinheit, durch die z.B. im INTRA-Modus die Daten eines Eingangsbildes blockweise einer zweidimensionalen diskreten Cosinus-Transformation (DCT) unterworfen werden. Diese Datenblöcke sind entweder die Luminanzwerte eines quadratischen Bildausschnittes, der aus 8 x 8 Bildpunkten besteht, oder die durch Unterabtastung gewonnenen 8 x 8 Chrominanzwerte (C_{B} oder C_{R}) eines quadratischen Bildausschnittes, der aus 16 x 16 Bildpunkten besteht. Alle Daten eines quadratischen Bildausschnittes aus 16 x 16 Bildpunkten werden Macroblock genannt.

Die Gesamtheit der Bildpunkte eines Videobildes ist lükenlos in quadratische Bildausschnitte (der Einfachheit halber ebenfalls Blöcke oder Macroblöcke genannt) unterteilt, deren zugehörige Datenblöcke nacheinander transformiert werden. Durch einen Quantisierer werden die mit zwölf Bit dual dargestellten DCT-Transformationskoeffizienten in sogenannte Quantisierungsindices umgewandelt und diese dann - VCL-codiert - in einen Pufferspeicher zur Übertragung eingeschrieben.

Entsprechend den vorhergehenden Ausführungen enthält der Rückkopplungszweig eine Funktionseinheit, die die Quantisierungsindices - bis auf den unvermeidlichen Quantisierungsfehler- wieder in ursprünglichen Koeffizienten umwandelt, und eine Rücktransformationseinheit, die die Cosinus-Transformation rückgängig macht. Mit einem nachfolgenden Addierer werden nur bei der Codierung eines Differenzbildes die Prädiktionswerte wieder hinzuaddiert und das derart zurückgewonnene, vollständige Videobild im Bildspeicher des Rückkopplungszweiges abgespeichert. Das Schleifenfilter ist dem Bildspeicher nachgeschaltet; sein Ausgang ist sowohl mit einem Eingang des Subtrahierers als auch über einen steuerbaren Schalter mit einem Eingang des Addierers verbunden. Es verbessert die Prädiktion für Bewegtbilder.

Die beschriebenen Codier- und Decodierprozesse werden durch eine Steuereinheit gesteuert. Sie steuert über entsprechende Signale u. a. den Quantisierer und das Schleifenfilter. Der Quantisierer verfügt über 31 Einstellungen, die nach (1) nur von Macroblock zu Macroblock geändert werden dürfen. Das zugehörige Steuersignal (Indikationssignal) wird von der Steuerung sowohl an den Quantisierer als auch an den Empfänger übertragen. Es kann entsprechend den vorgesehenen Einstellungen des Quantisierers 31 Werte annehmen. Je größer der Wert ist, desto gröber ist die Quantisierung.

Durch das Schleifenfilter werden die im Bildspeicher gespeicherten Blöcke flächenhaft und linear gefiltert. Im einzelnen heißt das, daß z.B. die Daten von drei Bildpunkten eines Blocks, die in einer horizontalen Reihe von Bildpunkten liegen, mit den Gewichten ½, ¼ und ½ linear gemittelt werden. Diese Daten werden durch Übertragung von Adressen von der Steuerung an den Adresseingang des Bildspeichers aus diesem ausgelesen und in Zwischenspeichern des Schleifenfilters gespeichert. Punkte, die am rechten oder linken Rand eines Blockes liegen, werden bei horizontaler Filterung nicht gefiltert. Sobald also die Steuereinheit die Adressen dieser Randpunkte überträgt, wird das Schleifenfilter unwirksam geschaltet. Entsprechendes gilt bei der vertikalen Filterung für die Randpunkte am oberen oder unteren Rand eines Blocks. Ebenfalls wird das Schleifenfilter unwirksam geschaltet, wenn der Coder im INTRA-Modus arbeitet.

Die Decodierung von übertragenen Videobildern auf der Empfängerseite erfolgt durch einen Decoder, der aus einer Schaltung von Funktionseinheiten besteht, die mit den Funktionseinheiten im Rückkopplungszweig des Coders übereinstimmen. Die Prädiktionswerte beim Coder entsprechen den decodierten Daten beim Decoder.

Die beschriebene blockweise Verarbeitung von Videobildern hat unerwünschte Folgen bei der Wiedergabe der Videobilder auf einem Monitor. Die decodierten Bilder lassen - besonders ausgeprägt bei niedrigen Übertragungsbitraten - Blockränder erkennen, die in ihrer Gesamtheit auf dem Monitor ein mehr oder weniger festes Raster bilden, das die Qualität der wiedergegebenen Bilder erheblich herabsetzt. Es sind eine Reihe von Vorschlägen bekannt, die dem Zweck dienen, durch Nachverarbeitung der decodierten Videobilder ein solches Blockraster möglichst vollständig herauszufiltern (vgl. z. B. folgende Dokumente: DE 39 17 085, DE 40 17 375, DE 41 28 977). Der Schaltungstechnische Aufwand für ein entsprechendes Filter ist bei den bekannten Vorschlägen erheblich, da ein solches Filter aus gesonderten Bausteinen aufgebaut und an den Ausgang eines Decoders nach (1) angeschlossen werden muß.

Aus Plompen, "Motion Video Coding for Visual Telephony", 1989, PTT Research Neher Laboratories, Leidschendam (NL), Seiten 181 bis 209, ist ein Videodecoder bekannt, bei dem die Decodierung mittels eines Schleifenfilters erfolgt. Es wird auch erwähnt, mittels des Schleifenfilters eine Filterung über die Blockgrenzen eines Videobildes hinweg vorzusehen.

Der Erfindung liegt die Aufgabe zugrunde, die Bildqualität der vom Decoder gelieferten Bilder mit möglichst wenig schaltungstechnischen Mitteln zu verbessern.

Diese Aufgabe wird bei dem eingangs genannten Decoder durch das im kennzeichnenden Teil des Patentanspruchs 1 aufgenommene Merkmal gelöst.

Vorteilhafte Ausgestaltungen sind darin zu sehen,
- daß die Steuereinheit in die Lage versetzt wird, die Filterung der vorbestimmten Bildpunktdaten zwischen der Decodierung zweier Videobilder vorzunehmen
- daß es sich bei den vorbestimmten Bildpunktdaten um die Daten von Bildausschnitten handelt, die in ihren Abmessungen mit denen für die Decodierung vorgesehenen Blöcken übereinstimmen, jedoch in ihrer geometrischen Lage gegen die Lage dieser Blöcke vertikal und horizontal verschoben sind
- daß die Verschiebung eine halbe Blockkantenlänge beträgt
- das Schleifenfilter nur für die Bildpunkte wirksam zu schalten, die Randpunkte der für die Decodierung vorgesehenen Blöcke sind.

Der geringe Schaltungsaufwand wird durch die Erfindung dadurch erreicht, daß das ohnehin in einem Decoder nach (1) vorhandene Schleifenfilter mit dem ohnehin vorhandenen Bildspeicher durch wenige Ergänzungen in der Steuereinheit zu einer Nachverarbeitungseinheit "zusammengeschaltet" wird. Die Doppelfunktion dieser beiden Bausteine erbringt also den beabsichtigten Vorteil.

Da beim Betrieb eines Decoders ohne die Erfindung die Daten eines im Bildspeicher gespeicherten Bildes blockweise gefiltert werden und hierfür in der Steuerung die erforderlichen Steuerprogramme vorgesehen sind, wird auch von diesen Steuerprogrammen bei der Erfindung Gebrauch gemacht, und zwar derart, daß beim Nachverarbeitungsprozeß die blockweise Filterung eines Videobildes lediglich mit veränderten Adressen für die Bildpunkte wiederholt wird. Zu den Bildpunktadressen, die für den Decodierungsprozeß vorgesehen sind, wird eine feste Adresse hinzuaddiert, sodaß sich mit den neuen Adressen ebenfalls eine blockweise Filterung ergibt. Der Unterschied besteht lediglich darin, daß die Blockstruktur bei der Nachverarbeitung gegenüber der nach (1) vorgesehenen Blockstruktur z. B. um eine halbe Blockdiagonale zur Bildmitte hin verschoben ist. Mit Blockstruktur ist hier die Aufteilung der Videobilder in 8x8-Blöcke gemeint. Die Blockstruktur nach (1) soll hier C-Struktur (Codierblockstruktur) und die Blockstruktur zur Nachverarbeitung N-Struktur bezeichnet werden. Die N-Struktur ist der C-Struktur derart überlagert, daß die Blockränder der C-Struktur in das Innere der Blöcke der N-Struktur fallen. Deshalb wird bei einer Filterung mit der N-Struktur über die Blockränder der C-Struktur gefiltert, also über jene Teile des Videobildes, die die Ursache der oben erwähnten Bildstörungen sind.

Weil das Schleifenfilter auch im Betrieb ohne die Erfindung wirksam und unwirksam gestaltet werden muß, kann auch dieser Programmteil beim Durchlauf eines Nachverarbeitungsprozesses vorteilhaft und einfach erweitert werden. Das Filter wird nur wirksam geschaltet, wenn Randpunkte der C-Struktur gefiltert werden. Bei allen anderen Bildpunkten wird das Filter unwirksam geschaltet. Anhand eines Ausführungsbeispiels und der Figuren soll die Erfindung nun näher erläutert werden.

Es zeigen
- Figur 1: das Prinzipschaltbild eines Coders nach der H.261-Empfehlung,
- Figur 2: das Prinzipschaltbild eines Decoders,
- Figur 3: einen flächenhaften Ausschnitt aus einem Videobild mit unterschiedlichen Blockstrukturen und
- Figur 4: ein Blockschaltbild eines Schleifenfilters.

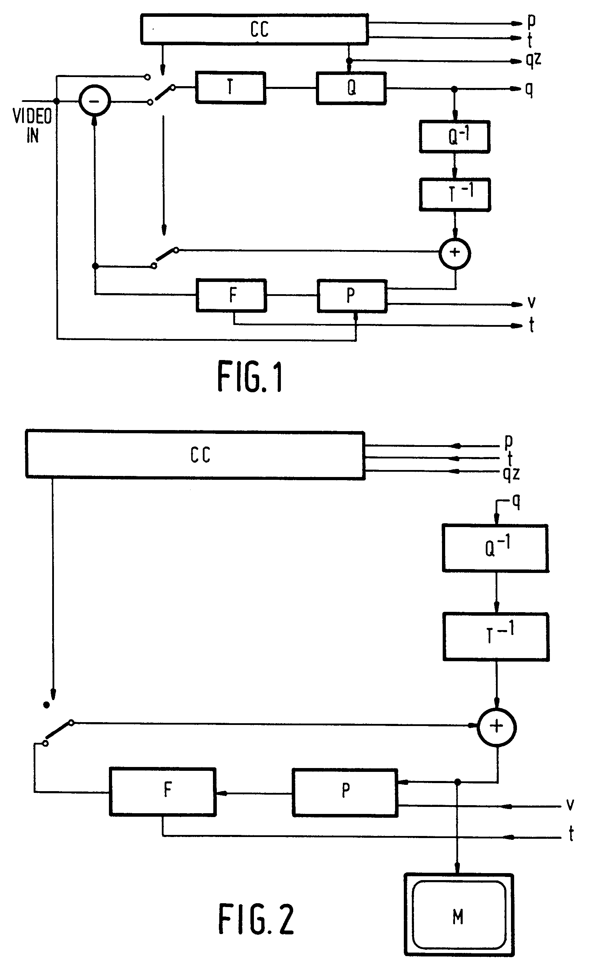

In Figur 1 werden dem abgebildeten (Quellen-)Coder über eine Leitung links oben in der Figur die Eingangsdaten VIDEO IN zugeführt. Es sind dies die Bildpunktdaten von nach Blöcken strukturierten Videobildern. Die Eingangsdaten werden einem Bildspeicher P (er enthält auch einen Bewegungsschätzer), einem Subtrahierer zur Bildung des Prädiktionsfehlers und einem Eingang eines steuerbaren Umschalters zugeführt. Gesteuert wird der Umschalter durch eine Steuerung CC, die auch einen Quantisierer Q einstellt. Über den erwähnten steuerbaren Umschalter gelangt entweder der Prädiktionsfehler oder das unveränderte Eingangssignal an den Eingang einer Transformationseinheit T; sie nimmt mit den Daten eines jeden Blocks eine diskrete Cosinus-Transformation vor.

Die Transformationskoeffizienten werden einem Quantisierer Q zugeführt, von ihm in Quantisierungsindices umgesetzt und u.a. als Signal q in einen nicht gezeigten Pufferspeicher VLC-codiert eingeschrieben. Zur Gewinnung der Prädiktionswerte enthält der Coder nach Figur 1 eine Rückkopplungsschleife, der ebenfalls das Signal q zugeführt wird. In einer Einheit Q⁻¹ der Rückkopplungsschleife wird die Umwandlung der Transformationskoeffizienten von Quantisierungsindices in 12-Bit-Codeworte vorgenommen. Eine nachgeschaltete Einheit T⁻¹ macht die Cosinus-Transformation rückgängig. Mit einem, auf die Einheit T⁻¹ folgenden Addierer werden zu dem rückgewonnenen Signal die Prädiktionswerte hinzuaddiert, wenn der Prädiktionsfehler codiert worden ist. Andernfalls wird das zurückgewonnene Signal unverändert in den Bildspeicher P eingeschrieben. Durch ein Schleifenfilter F werden die Prädiktionswerte für die Codierung des nächstfolgenden Bildes im Falle bewegter Bilder von ihren kurzwelligen Anteilen befreit.

Die bisher nicht erwähnten, jedoch in der Figur 1 angedeuteten Signale p, t, qz, v und t sind Nebeninformationen, die für die Erfindung von untergeordneter Bedeutung sind. Sie sind notwendig, um den Decodierungsprozeß auf der Empfängerseite zu steuern.

Da die Figur 1 nur der prinzipiellen Erläuterung dient, sind z. B. viele Steuerleitungen und Taktleitungen nicht eingetragen, weil die Figur sonst an Übersichtlichkeit verlieren würde. Der Fachmann jedoch weiß, durch welche Steuerleitungen und durch welche Taktleitungen die einzelnen Bausteine miteinander zu verbinden sind. Hierzu bedarf es also keiner zusätzlichen Information. So muß z. B. die Einheit Q-1 ebenso vom Signal qz gesteuert werden wie die Einheit Q.

Ein Decoder nach (1) benötigt die Bausteine des Codierzweiges (einschließlich des Subtrahierers am Eingang) nicht. Durch einen solchen Decoder wird das übertragene Signal q von Einheiten verarbeitet, die zu denen des Coders im Rückkopplungszweig nach Figur 1 funktionsgleich sind und daher auch die gleichen Bezeichnungen tragen. Das Prädiktionssignal auf der Senderseite entspricht dem decodierten Videosignal auf der Empfängerseite. Unter den genannten Einschränkungen sowie mit geringfügigen Änderungen stellt Figur 1 also auch das Prinzipschaltbild eines Decoders nach (1) dar.

Der Vollständigkeit wegen ist in Fig.2 nocheinmal ein Decoder nach (1) als Blockschaltbild gezeigt. Ebenso wie auf der Senderseite steuert die zentrale Steuereinheit CC auf der Empfängerseite den Decodierprozeß unter anderem durch Adressierung des Bildspeichers P über nicht gezeigte Adressleitungen. Jedem Bildpunkt eines Videobildes wird durch die Steuereinheit CC eine zweidimensionale Adresse zugeordnet. Dieser Umstand eröffnet die Möglichkeit durch geringe Erweiterungen ganze Programmteile, die von der Steuereinheit CC durchlaufen werden, z.B. auf Bildpunkte anzuwenden, die gegenüber der nach (1) vorgesehenen Lage um einen festen Vektor verschoben sind. Ebenso läßt sich das Schleifenfilter durch geringfügige Erweiterungen der in der Steuereinheit CC gespeicherten Programme für jeden Bildpunkt ausschaltbar machen, statt wie in (1) vorgesehen, nur für Blockrandpunkte der C-Struktur. Von dieser Möglichkeit der nach (1) abweichenden und zusätzlichen Verarbeitung der Bildpunkte macht nun die Erfindung Gebrauch. Das im Bildspeicher P gespeicherte Bild wird z.B. in den Pausen zwischen zwei aufeinander folgenden Bildern nochmals ausgelesen und durch das Schleifenfilter F derart gefiltert, daß die Blockränder der C-Struktur geglättet werden. Das so gefilterte Bild wird nicht in den Speicher P eingeschrieben, da sonst die Prädiktionsdaten verloren gehen würden. Es wird vielmehr unmittelbar nach der Filterung - und nach der unter Umständen notwendigen Formatänderung - auf dem Schirm eines Monitors M wiedergegeben.

Der weiteren Erläuterung dient Figur 3; sie zeigt schematisch einen Ausschnitt aus einem Videobild, und zwar einen Ausschnitt aus dem linken oberen Teil des Bildes. Die durchgezogenen Linien sind die Blockränder nach (1), also die Blockränder der C-Struktur. Jeder Block dieser Struktur enthält 64 Bildpunkte. Die Adresse des am weitesten links und am weitesten oben gelegenen Bildpunktes läßt sich z. B. in der Form (1,1) darstellen, wobei die erste 1 die horizontale Komponente und die zweite 1 die vertikale Komponente der Adresse ist. Der Bildpunkt rechts unten im linken oberen Block hat dann die Adresse (8,8).

Die unterbrochen gezeichneten Linien in Figur 3 sind die Blockränder der N-Struktur. Man erhält die im Beispiel verwendete N-Struktur aus der C-Struktur, indem zu allen Adressen die Adresse (4,4) hinzuaddiert wird. Wie Figur 3 zeigt, fallen die Ränder der C-Struktur in das Innere der N-Struktur. Wird nun blockweise über die N-Struktur so gefiltert, wie es in (1) für die C-Struktur vorgesehen ist, werden Störungen an den ursprünglichen Blockrändern weitgehend herausgefiltert. Der nach (1) vorgesehene Filterprozeß wird lediglich mit den Adressen (a+4,b+4) vorgenommen werden, wobei a und b beliebige horizontale bzw. vertikale Adressenkomponenten eines bliebigen, für die Filterung in Frage kommenden Bildpunktes sind.

Eine vorteilhafte Variante der Filterung nach der N-Struktur ist ebenfalls in Figur 3 angedeutet: es werden nur Bildpunkte der N-Struktur gefiltert, die in dem schraffierten Bereich liegen, also in den Blockrandbereichen der C-Struktur. Bei allen anderen Punkten wird das Filter unwirksam geschaltet.

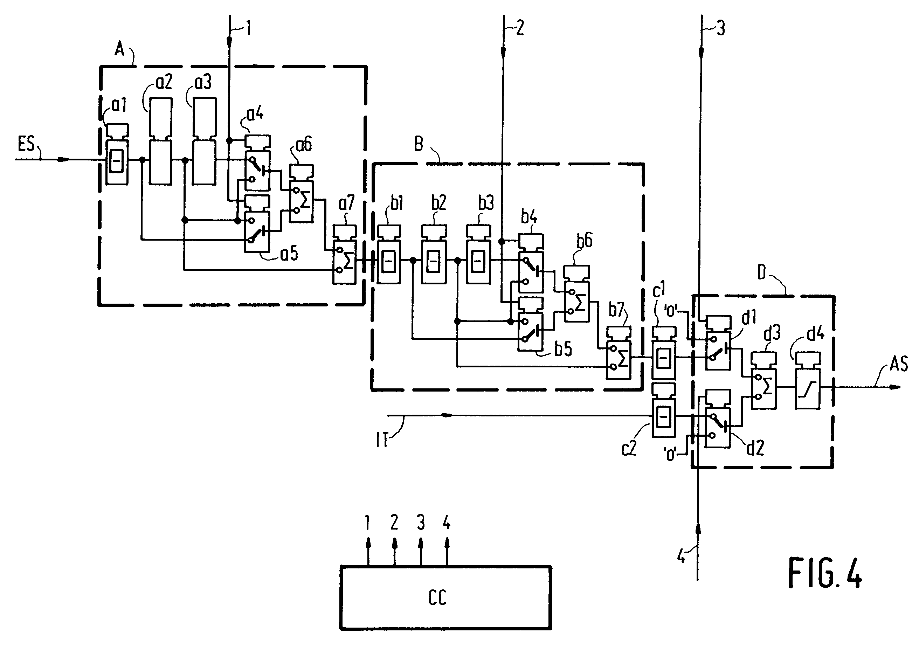

Fig. 4 zeigt eine Anordnung aus einem Schleifenfilter nach Fig.2 und aus Bausteinen, die - in Signalflußrichtung gesehen - auf das Schleifenfilter F folgen. Die Anordnung läßt sich grob in drei Funktionseinheiten gliedern, nämlich in ein vertikales Filter A, ein horizontales Filter B und in Umschalter mit einem Addierer D.

Über eine Leitung ES laufen die aus dem Bildspeicher P ausgelesenen Daten und über eine Leitung AS werden Daten in den Bildspeicher P wieder eingeschrieben oder auf dem Monitor M der Fig. 2 angezeigt. Eine Leitung IT ist mit dem Ausgang der Einheit T⁻¹ verbunden. Über Steuerleitungen werden die Einheiten A,B, und D von der Steuereinheit CC gesteuert. Über die Leitung ES werden die Bildpunktdaten einen Blockes zeilenweise an ein Eingangs-Flip-Flop a1 übergeben. In nachgeschalteten Verzögerungsgliedern a2 und a3 werden die eingelesenen Bildpunktdaten um jeweils eine Blockzeile verzögert. Liegen z. B. am Ausgang des Verzögerungsgliedes a3 die Daten des ersten Bildpunktes der ersten Blockzeile an, so stehen am Ausgang des Verzögerungsgliedes a2 die Daten des ersten Bildpunktes der zweiten Blockzeile und am Ausgang des Flip-Flops a1 die Daten des ersten Bildpunktes der dritten Blockzeile an. Die an den Ausgängen der Bausteine a1, a2 und a3 anliegenden Daten sind die Daten von Bildpunkten, die im Videobild auf einer vertikalen Geraden unmittelbar aufeinander folgen. Aus diesem Datentripel werden nun für den mittleren Bildpunkt gefilterte Daten gewonnen, indem die Daten des Tripels zunächst mit den Gewichten 1, 2 und 1 addiert werden. Die Addition der beiden Randpunkte des Tripels übernimmt ein Addierer a6. Die Verdoppelung der Daten des mittleren Punktes erfolgt durch eine Stellenverschiebung am Eingang des Addierers a7; sie ist aus Fig.4 nicht unmittelbar entnehmbar.
Durch ein Steuersignal über die Steuerleitung 1 wird das vertikale Filter A unwirksam geschaltet, indem Umschalter a4 und a5 in ihre zweite Stellung gebracht werden. In dieser Stellung wird jedem Eingang das Addierers a6 der in der Mitte stehende Wert des Bildpunkttripels zugeführt, sodaß am Ausgang des Addierers a7 die Daten des mittleren Bildpunktes mit vierfachen Gewicht erscheinen.
Die vertikal gefilterten Daten werden nun blockzeilenweise an das Horizontalfilter A übergeben. Von diesem werden die Daten durch eine Anordnung von D-Flip-Flops b1, b2 und b3 jeweils um einen Bildpunkttakt verzögert. An den Ausgängen der Flip-Flops b1, b2 und b3 liegen folglich die (vertikal gefilterten) Daten von Bildpunkten an, die im Videobild auf einer horizontalen Geraden unmittelbar aufeinander folgen. Die Funktion von Umschaltern b4 und b5, sowie die von Addierern b6 und b7 entspricht der Funktion der Addierer und Umschalter a4, a5, a6 und a7 völlig, so daß deren Erläuterung unterbleiben kann.
Am Ausgang des Addierers b7 stehen die vertikal und horizontal gefilterten Bildpunktdaten an. Damit sich die in (1) geforderte Gewichtung von 1/4, 1/2 und 1/4 sowohl für die horizontale als auch für die vertikale Filterung ergibt, müssen die am Ausgang des Addierers anstehenden Daten noch durch 16 dividiert werden. Diese Division erfolgt ebenfalls durch eine - dem Fachmann geläufige - Stellenverschiebung in den (im Dualsystem dargestellten) Daten am Ausgang des Addierers b7. Über ein Flip-Flop c1 werden nun die vorschriftsmäßig gewichteten Daten an einen ersten Eingang eines weiteren Umschalters d1 gegeben. Je nach Stellung dieses Umschalters d1 werden die gefilterten Daten oder eine binär dargestellte Null an einen ersten Eingang eines nachgeschalteten Addierers d3 geleitet. Der Umschalter d1 entspricht dem in Fig. 2 gezeigten Umschalter, der von der Steuereinheit CC nur dann umgestellt wird, wenn der Decoder seine Betriebsart vom INTRA-Modus zum INTER-Modus oder umgekehrt wechselt.

Ein weiterer Umschalter d2, der auf ein Flip-Flop c2 folgt, leitet entweder die Daten von der Einheit T⁻¹ oder binär dargestellte Nullen an den zweiten Eingang des Addierers d3. Der Umschalter d2 steht in der eingezeichneten Stellung (Weiterleitung von Daten der Einheit T⁻¹), wenn die Filter A und B nur für das Decodieren - also ohne Einsatz der Erfindung - verwendet werden. Die binär dargestellten Nullen werden weitergegeben, der sich der Decoder in der Betriebsart "Nachverarbeitung" gebracht wird.

Ein Begrenzer d4 begrenzt die Daten, bevor sie über eine Leitung AS wieder in den Bildspeicher P eingeschrieben oder auf dem Monitor M dargestellt werden. Eine Stellungsänderung des Umschalters d2 erfolgt über eine Steuerleitung 4.

Die Betriebsart "Nachverarbeitung" ist mit allen anderen in (1) vorgesehen Betriebsarten kompatibel.

## Patentansprüche

1. Videodecoder mit einer Steuereinheit (CC), einem Bildspeicher (P) und einem Schleifenfilter (F) zur blockweisen Decodierung von codierten Videobildern (q), wobei die Steuereinheit (CC) zur Steuerung einer blockweisen Filterung vorbestimmter ausgelesener Bildpunktdaten mittels des Schleifenfilters (F) dient,
**dadurch gekennzeichnet,**
daß eine Nachverarbeitung eines decodierten Videobildes vorgesehen ist, bei der mittels desselben Schleifenfilters (F) eine Filterung über die Blockränder der beim Decodieren vorgesehenen Blöcke erfolgt.

2. Videodecoder nach Anspruch 1,
gekennzeichnet durch Mittel,
mit denen die Steuereinheit (CC) in die Lage versetzt wird, die Filterung der vorbestimmten Bildpunktdaten zwischen der Decodierung zweier Videobilder (q) vorzunehmen.

3. Videodecoder nach Anspruch 1 oder 2,
dadurch gekennzeichnet,
daß es sich bei den vorbestimmten Bildpunktdaten um die Daten von Bildausschnitten handelt, die in ihren geometrischen Abmessungen mit den für die Decodierung vorgesehenen Blöcken übereinstimmen, jedoch in ihrer geometrischen Lage gegen die Lage dieser Blöcke vertikal und horizontal verschoben sind.

4. Videodecoder nach Anspruch 3, dadurch gekennzeichnet, daß die Verschiebung eine halbe Blockkantenlänge beträgt.

5. Videodecoder nach einem der vorhergehenden Ansprüche,
gekennzeichnet durch Mittel, die die Steuereinheit (CC) in die Lage versetzen, das Schleifenfilter (F) nur für die Bildpunkte wirksam zu schalten, die Randpunkte der für die Decodierung vorgesehenen Blöcke sind.

## Claims

1. A video decoder comprising a control unit (CC), a picture memory (P) and a loop filter (F) for blockwise decoding of coded video pictures (q), in which the control unit (CC) is used for controlling a blockwise filtering operation of predetermined, read pixel data by means of a loop filter (F), characterized in that a decoded video picture is post-processed, in which a filtering operation is performed by means of the same loop filter (F) via the block edges of the blocks provided for decoding.

2. A video decoder as claimed in claim 1, characterized by means with which the control unit (CC) is enabled to filter the predetermined pixel data between decoding operations of two video pictures (q).

3. A video decoder as claimed in claim 1 or 2, characterized in that the predetermined pixel data are the data of picture sections whose geometrical dimensions correspond to those of the blocks provided for decoding, but whose geometrical positions are offset vertically and horizontally with respect to the positions of said blocks.

4. A video decoder as claimed in claim 3, characterized in that the offset covers half a block edge length.

5. A video decoder as claimed in any one of the preceding claims, characterized by means enabling the control unit (CC) to activate the loop filter (F) only for those pixels which are peripheral pixels of the blocks provided for decoding.

## Revendications

1. Décodeur vidéo avec une unité de commande (CC), une mémoire d'images (P) et un filtre de boucle (F) pour le décodage bloc par bloc d'images vidéo codées (q), l'unité de commande (CC) servant à la commande d'un filtrage bloc par bloc de données de pixels lues préalablement déterminées à l'aide du filtre de boucle (F),
caractérisé en ce qu'un traitement ultérieur d'une image vidéo décodée est prévu, un filtrage au-delà des bords de bloc des blocs prévus pour le décodage étant effectué à l'aide du même filtre de boucle (F).

2. Décodeur vidéo selon la revendication 1,
caractérisé par des moyens avec lesquels l'unité de commande (CC) est en mesure d'effectuer le filtrage des données de pixels préalablement déterminées entre le décodage de deux images vidéo (q).

3. Décodeur vidéo selon l'une des revendications 1 ou 2,
caractérisé en ce que les données de pixels préalablement déterminées sont des données de segments d'image qui correspondent dans leurs dimensions géométriques aux blocs prévus pour le décodage mais, dans leur position géométrique, sont décalées horizontalement et verticalement par rapport à la position de ces blocs.

4. Décodeur vidéo selon la revendication 3, caractérisé en ce que le décalage s'élève à une demi-longueur du bord des blocs.

5. Décodeur vidéo selon l'une des revendications précédentes, caractérisé par des moyens qui permettent à l'unité de commande (CC) de n'activer le filtre de boucle (F) que pour les pixels qui se trouvent sur les points limites des blocs prévus pour le décodage.
